# EUROPÄISCHE PATENTANMELDUNG

(11) **EP 1 422 876 A2**
(43) Veröffentlichungstag der Anmeldung: **26.05.2004**
(21) Anmeldenummer: 03103296.4
(22) Anmeldetag: 04.09.2003
(51) Int. Cl.: H04L 12/28, H04L 29/06, H04L 12/46, G06F 9/46

(54) **Verfahren und Vorrichtung zur funktionalen Verbindung von mindestens zwei Netzwerken**

(30) Priorität: 19.11.2002 DE 10254017
(71) Anmelder: Robert Bosch GmbH, 70442 Stuttgart (DE)
(72) Erfinder: Vollmer, Vasko, 31188 Holle (DE); Majdoub, Mohamed, 30449 Hannover (DE)

(57) **Zusammenfassung**

Es ist Aufgabe der vorliegenden Erfindung, ein Verfahren anzugeben, mit welchem mindestens ein nicht auf dem HAVi-Standard basiertes Netzwerk (externes Netzwerk) mit einem HAVi-Netzwerk funktional verbunden werden kann. Dabei sollen Geräte/Funktionen aus dem HAVi-Netzwerk von Geräten aus dem externen Netzwerk und Geräte/Funktionen aus dem externen Netzwerk von Geräten aus dem HAVi-Netzwerk ansteuerbar sein. Weiterhin soll eine Vorrichtung zur Realisierung des erfindungsgemäßen Verfahrens angegeben werden.

Dazu werden Geräte/Funktionen eines HAVi-Netzwerkes in mindestens einem externen Netzwerk durch Abbildung der Geräte/Funktionen des HAVi-Netzwerkes in dafür vorgesehenen Module innerhalb des HAVi-Netzwerkes und Bekanntmachen der in den Modulen abgebildeten Geräte/Funktionen in mindestens einem externen Netzwerk repräsentiert und/oder Geräte/Funktionen des mindestens einen externen Netzwerkes werden durch Bekanntmachen der Geräte/Funktionen des mindestens einen externen Netzwerks in mindestens einem HAVi-Netzwerk und Abbildung der Geräte/Funktionen des externen Netzwerkes in dafür vorgesehene Module innerhalb des HAVi-Netzwerkes repräsentiert.

## Beschreibung

### Technisches Gebiet

Die Erfindung betrifft ein Verfahren und eine Vorrichtung zur funktionalen Verbindung von mindestens zwei Netzwerken, wobei mindestens ein Netzwerk ein auf dem HAVi-Standard basierendes Netzwerk (HAVi-Netzwerk) und mindestens ein Netzwerk ein nicht auf dem HAVi-Standard basierendes Netzwerk (externes Netzwerk) ist, gemäß den in den Oberbegriffen der Ansprüche 1 und 6 genannten Merkmalen.

### Stand der Technik

Die IEEE (Institute of Electrical and Electronics Engineers, Inc.) ist eine internationale Organisation, die unter anderem Standards für elektronische Netzwerke erarbeitet. IEEE1394 ist ein serielles Bussystem der IEEE, bei dem verschiedene Endgeräte (so genannte Knoten) entweder über ein elektrisches Kabel oder einen Lichtwellenleiter angeschlossen werden. Dabei kann ein Knoten wahlweise als Endstück (so genanntes Blatt) oder als Relaisknoten (so genannter Zweig) ausgeführt sein. Der oberste Knoten wird als Wurzel bezeichnet. Durch den Einsatz der verschiedenen Knotentypen kann eine geeignete Topologie für ein Netzwerk aufgebaut werden. Ein Blatt empfängt dabei Informationspakete und verarbeitet sie, falls die Ziel-Adresse des Paketes mit der eigenen übereinstimmt. Ein Zweig muss zusätzlich alle Pakete, die er auf einem Port empfängt, auf allen anderen Ports aussenden.

IEEE1394 sieht vor, dass das Netzwerk selbstkonfigurierend ist, das heißt, nach dem Einschalten oder nach einem Reset senden alle Knoten ausgewählte Informationen über sich selbst ins Netz. Diese Informationen werden dabei von allen Knoten empfangen. Ein Knoten kann dabei in der Art ausgeführt sein, dass er zusätzliche Verwaltungsfunktionen für das Netzwerk übernehmen kann (Busmanagement). Dazu sammelt er alle Informationen der anderen Knoten, verarbeitet sie und speichert sie intern geeignet ab. Sollten mehrere Knoten Busmanagementfähigkeiten besitzen, gibt es ein Konkurrenzverfahren, aus dem ein Knoten als Sieger hervorgeht, welcher dann das Busmanagement übernimmt.

Neben den Verfahren, wie sie in den Spezifikationen zu IEEE1394 beschrieben sind, gibt es eine busunabhängige Erweiterung, die unter dem Namen "Home Audio Video interoperability" (HAVi) von einem Firmenkonsortium spezifiziert worden ist. HAVi ist in erster Linie für den Einsatz in einem IEEE1394-Netzwerk konzipiert und bezeichnet die Summe aller Geräte, die innerhalb eines geschlossenen Netzwerk-Kontextes von einem oder mehreren HAVi-basierten Knoten mit den im HAVi-Standard beschriebenen Methoden aus gesteuert werden, sowie die dazu notwendige Netzwerk-Infrastruktur. Dabei können Teile des HAVi-Netzes auch als Geräte ohne eigene HAVi-Funktionalität ausgeführt werden (so genannte Legacy Devices). Typisch für HAVi-Netzwerke ist die Verwendung hochratiger Netzwerktechnologien (zum Beispiel IEEE1394, MOST, Ethernet; WLAN).

Insbesondere die Fern-Kontrolle von Geräten und/oder Funktionen (nachfolgend auch Geräte/Funktionen) auf Geräten von jedem anderen Punkt im Netzwerk wird in der HAVi-Spezifikation beschrieben.

Dazu ist ein verteiltes Modell beschrieben, bei dem die Steuerung der Geräte über Kontrollmodule, so genannte "Device Control Modules" (DCM), vorgenommen wird. Diese DCM laufen als Softwareelement (SE) auf dem Gerät, das Kontrollfunktionen auf einem anderen Gerät ausführen will. Dabei ist ein DCM jeweils spezifisch für ein bestimmtes Gerät oder eine Geräteklasse.

HAVi basiert auf einem modularen Konzept für ein verteiltes System. Die einzelnen Module stellen dabei die Softwareelemente (SE) dar. Alle SE im System werden einheitlich adressiert. SE können in den meisten Fällen sowohl zentral, als auch verteilt angeordnet sein. Das heißt, dass eine Implementierung mit nur einer Instanz eines bestimmten Softwareelementes (zum Beispiel einem Stream Manager) bis hin zu einer Implementierung, die in jedem Gerät eine solche Instanz vorsieht, möglich ist.

Über das so genannte Messaging System sind sämtliche SE eines Netzwerkes miteinander verbunden. Ein Netzwerk nach dem HAVi-Standard (HAVi-Netzwerk) weist in der Regel folgende SE auf:

Die Registry beinhaltet Informationen über jedes im Netzwerk verfügbare SE und jedes verfügbare Gerät beziehungsweise jede verfügbare Funktion. Informationen über die einzelnen SE werden dabei in Attributen abgelegt. Zusätzlich zu den vordefinierten Attributen ist es möglich, weitere hinzuzufügen. Die Architektur der Registry stellt ein verteiltes System dar, das heißt, jedes Gerät kann einen Teil der gesamten Registry beinhalten, sie kann aber auch zentral gehalten werden. Für den Zugriff auf die Registry ist dies unsichtbar, da die verschiedenen Instanzen der Registry innerhalb des Netzwerkes gegebenenfalls die angeforderten Information selbsttätig austauschen.

Der Stream Manager (SM) dient dem Auf- und Abbau und der Verwaltung von Verbindungen zwischen SE und/oder Geräten. Der SM kann wie die Registry als verteiltes System aufgebaut sein. Dabei dienen spezielle Befehle dazu, den Zustand aller SM oder eines bestimmten SM zu erhalten.

Der Event Manager transportiert Mitteilungen über Zustandsänderungen im System zu den Kommunikationsteilnehmern.

Der Resource Manager führt die Belegung und Freigabe von Ressourcen (Geräten, SE) durch und speichert geplante Vorgänge (zum Beispiel Videorekorderaufnahmen).

Der DCM Manager (DM) ist verantwortlich für das Installieren und Deinstallieren von DCMs bei entsprechend geeigneten Geräten. Dabei wird ein standardisiertes Verfahren zur Installation von DCMs im Java-Bytecode-Format angeboten. Eine Installation von nativem Code (Binary) ist nicht im Standard beschrieben, kann jedoch als proprietäre Lösung hinzugefügt werden.

Ein Functional Control Module (FCM) ist ein SE, mit dem eine funktionale Einheit eines Gerätes (zum Beispiel ein CD-Laufwerk oder ein UKW-Tuner) angesteuert wird. Ein DCM (Device Control Module) wird dabei aus den allen DCMs gemeinsamen Grundfunktionen und gerätespezifischen FCMs gebildet.

Diese, oder die jeweils in einem Gerät benötigten, Module bilden eine einheitliche Applikationsschnittstelle. Durch diese einheitliche Schnittstelle wird eine Interoperabilität zwischen Applikationen und Geräten verschiedener Hersteller erreicht (Interoperability API).

Der HAVi-Standard bietet jedoch keine Möglichkeit, um neben einem IEEE1394 basierten Datenbus andere Kommunikationstechnologien anzubinden. Solche anderen Kommunikationstechnologien (so genanntes externes Netzwerk) bezeichnet dabei die Summe aller Geräte innerhalb eines geschlossenen Netzwerk-Kontextes, die nicht von einem HAVi-basierten Knoten aus gesteuert werden, sowie die dazu notwendige Infrastruktur. Typisch ist hier die Verwendung niedrigratiger Netzwerkverbi n-dungen wie zum Beispiel CAN, LIN, WLAN, Ethernet, Bluetooth, GSM oder UMTS.

### Darstellung der Erfindung, Aufgabe, Lösung, Vorteile

Es ist daher Aufgabe der vorliegenden Erfindung, ein Verfahren anzugeben, mit welchem mindestens ein nicht auf dem HAVi-Standard basiertes Netzwerk (externes Netzwerk) mit mindestens einem HAVi-Netzwerk funktional verbunden werden kann. Dabei sollen Geräte/Funktionen aus dem HAVi-Netzwerk von Geräten/Funktionen aus dem externen Netzwerk und Geräte/Funktionen aus dem externen Netzwerk von Geräten/Funktionen aus dem HAVi-Netzwerk ansteuerbar sein. Weiterhin soll eine Vorrichtung zur Realisierung des erfindungsgemäßen Verfahrens angegeben werden.

Diese Aufgabe wird erfindungsgemäß gelöst durch die Merkmale im kennzeichnenden Teil des Anspruchs 1 (Verfahrensanspruch) und die Merkmale im kennzeichnenden Teil des Anspruchs 6 (Vorrichtungsanspruch) im Zusammenwirken mit den Merkmalen im Oberbegriff. Zweckmäßige Ausgestaltungen der Erfindung sind in den Unteransprüchen enthalten.

Der Erfindung liegt die Idee zugrunde, die Geräte/Funktionen des externen Netzwerkes als Geräte/Funktionen des HAVi-Netzwerkes zu präsentieren und von Geräten/Funktionen des HAVi-Netzwerkes auch in der Art anzusprechen.

Dazu werden Geräte/Funktionen eines HAVi-Netzwerkes in mindestens einem externen Netzwerk durch Abbildung der Geräte/Funktionen des HAVi-Netzwerkes in dafür vorgesehene Module innerhalb des HAVi-Netzwerkes und Bekanntmachen der in den Modulen abgebildeten Geräte/Funktionen in mindestens einem externen Netzwerk repräsentiert und/oder Geräte/Funktionen des mindestens einen externen Netzwerkes werden durch Bekanntmachen der Geräte/Funktionen des mindestens einen externen Netzwerks in mindestens einem HAVi-Netzwerk und Abbildung der Geräte/Funktionen des externen Netzwerkes in dafür vorgesehene Module innerhalb des HAVi-Netzwerkes repräsentiert.

Hierdurch wird vorteilhafterweise erreicht, dass die Geräte/Funktionen eines externen Netzwerkes von den Geräten/Funktionen eines HAVi-Netzwerkes gesteuert werden können, da diese Geräte/Funktionen als im HAVi-Netzwerk bekannte Module vorhanden sind. Ebenso ist es möglich, Geräte/Funktionen des HAVi-Netzwerkes durch Geräte eines externen Netzwerkes zu steuern, da von jedem HAVi-Gerät beziehungsweise jeder HAVi-Funktion ein Abbild in Form eines HAVi-kompatiblen Moduls vorgesehen ist, welches im externen Netzwerk bekannt gemacht wird. Für das externe Netzwerk erscheinen diese Module als Geräte/Funktionen des eigenen (externen) Netzwerkes und können gesteuert werden. In dem Modul erfolgt die Umsetzung von der Syntax und Semantik des externen Netzwerkes in die Syntax und Semantik des HAVi-Netzwerkes.

Die Abbildung der HAVi-Geräte/Funktionen erfolgt vorzugsweise in Functional Control Module (FCM), in die so genannten Mirror FCM. Die Bekanntmachung der Mirror FCM erfolgt ebenfalls durch ein Functional Control Module, dem so genannten Server FCM.

Die Bekanntmachung der Geräte/Funktionen eines externen Netzwerkes erfolgt ebenfalls durch ein Functional Control Module, dem so genannten Client FCM. Die Geräte des externen Netzwerkes werden nach Bekanntmachung im HAVi-Netzwerk in dafür vorgesehene Functional Control Module, so genannte Externe Geräte FCM, abgebildet und können dann von den Geräten des HAVi-Netzwerkes angesteuert werden. Dabei erfolgt die Umsetzung von der Syntax und Semantik des HAVi-Netzwerkes in die Syntax und Semantik des externen Netzwerkes im Externe Geräte FCM.

Das bedeutet, dass ein externes Netzwerk über eine Kombination aus HAVi-konformen Softwareelementen angebunden werden kann. Diese kommunizieren über das Messaging System eines HAVi-Netzes unterei n-ander und mit anderen Softwareelementen.

Eine erfindungsgemäße Vorrichtung (Gateway) zur funktionalen Verbindung von mindestens zwei Netzwerken, wobei mindestens ein Netzwerk ein auf dem HAVi-Standard basierendes Netzwerk (HAVi-Netzwerk) und mindestens ein Netzwerk ein nicht auf dem HAVi-Standard basierendes Netzwerk (externes Netzwerk) ist, weist mindestens eine Einheit zum Umwandeln von Informationen/Nachrichten von der Syntax und Semantik des HAVi-Netzwerkes in die Syntax und Semantik des externen Netzwerkes und mindestens eine Einheit zum Übertragen dieser Informationen/Nachrichten von einem HAVi-Netzwerk in mindestens ein externes Netzwerk und/oder eine Einheit zum Übertragen von Informationen/Nachrichten aus mindestens einem externen Netzwerk in ein HAVi-Netzwerk und eine Einheit zum Umwandeln von Informationen/Nachrichten von der Syntax und Semantik des externen Netzwerkes in die Syntax und Semantik des HAVi-Netzwerkes auf.

Dabei sind die Einheit zum Umwandeln von Informationen/Nachrichten von der Syntax und Semantik des HAVi-Netzwerkes in die Syntax und Semantik des externen Netzwerkes, die Einheit zum Übertragen dieser Informationen/Nachrichten von einem HAVi-Netzwerk in mindestens ein externes Netzwerk, die Einheit zum Übertragen von Informationen/Nachrichten aus mindestens einem externen Netzwerk in ein HAVi-Netzwerk sowie die Einheit zum Umwandeln von Informationen/Nachrichten von der Syntax und Semantik des externen Netzwerkes in die Syntax und Semantik des HAVi-Netzwerkes vorzugsweise Functional Control Module (FCM).

Das FCM zum Umwandeln von Informationen/Nachrichten von der Syntax und Semantik des HAVi-Netzwerkes in die Syntax und Semantik des externen Netzwerkes ist dabei das so genannte Externe Geräte FCM. Das FCM zum Übertragen dieser Informationen/Nachrichten von einem HAVi-Netzwerk in mindestens ein externes Netzwerk ist das so genannte Client FCM.

Das FCM Einheit zum Übertragen von Informationen/Nachrichten aus mindestens einem externen Netzwerk in ein HAVi-Netzwerk ist das so genannte Server FCM und das FCM zum Umwandeln von Informationen/Nachrichten von der Syntax und Semantik des externen Netzwerkes in die Syntax und Semantik des HAVi-Netzwerkes ist das so genannte Mirror FCM.

Das Mirror FCM sowie das Geräte FCM weisen ein Befehlskonvertierungsmodul zur Umsetzung von Syntax und Semantik auf. Das Mirror FCM weist zusätzlich ein Funktionsrepräsentanzmodul zur Darstellung des aktuellen Zustandes aller Geräte innerhalb des Havi-Netzwerkes auf.

Server FCM und Client FCM weisen ein so genanntes Device Discovery Representation Modul zur Darstellung des Zustandes und/oder der Verfügbarkeit der Geräte/Funktionen des externen Netzwerkes und eine Schnittstelle zum externen Netzwerk auf.

Server FCM, Client FCM, Mirror FCM und Externe Geräte FCM weisen vorzugsweise eine HAVi-Schnittstelle und ein Management Modul zur Steuerung aller Komponenten der einzelnen FCM auf.

In einem besonders bevorzugten Ausführungsbeispiel ist die Funktion mindestens eines Mirror FCMs in ein FCM eines korrespondierenden Geräts integriert.

Weitere bevorzugte Ausgestaltungen der Erfindung ergeben sich aus den in den Unteransprüchen genannten Merkmalen.

### Kurze Beschreibung der Zeichnungen

Nachstehend wird die Erfindung in Ausführungsbeispielen anhand der beigefügten Zeichnungen näher erläutert. Es zeigen:
- Fig. 1: eine schematische Darstellung eines erfindungsgemäßen Gateways zur Steuerung der Geräte/Funktionen des HAVi-Netzwerkes über Geräte/Funktionen eines externen Netzwerkes;
- Fig. 2: eine schematische Darstellung eines erfindungsgemäßen Gateways zur Steuerung der Geräte/Funktionen eines externen Netzwerkes über Geräte/Funktionen des HAVi-Netzwerkes und
- Fig. 3: eine schematische Darstellung eines Netzwerkes mit einem erfindungsgemäßen Gateway.

### Bester Weg zur Ausführung der Erfindung

Grundsätzlich lassen sich zwei Fälle unterschieden, die sowohl einzeln als auch gemeinsam realisierbar sind. Der erste Fall ergibt sich, wenn eine Funktion eines an das HAVi-Netz angeschlossenen Gerätes vom externen Netz aus angesprochen werden soll. Der zweite Fall ist das Ansprechen einer Funktion eines Gerätes, das am externen Netz angeschlossen ist, vom HAVi Netz aus.

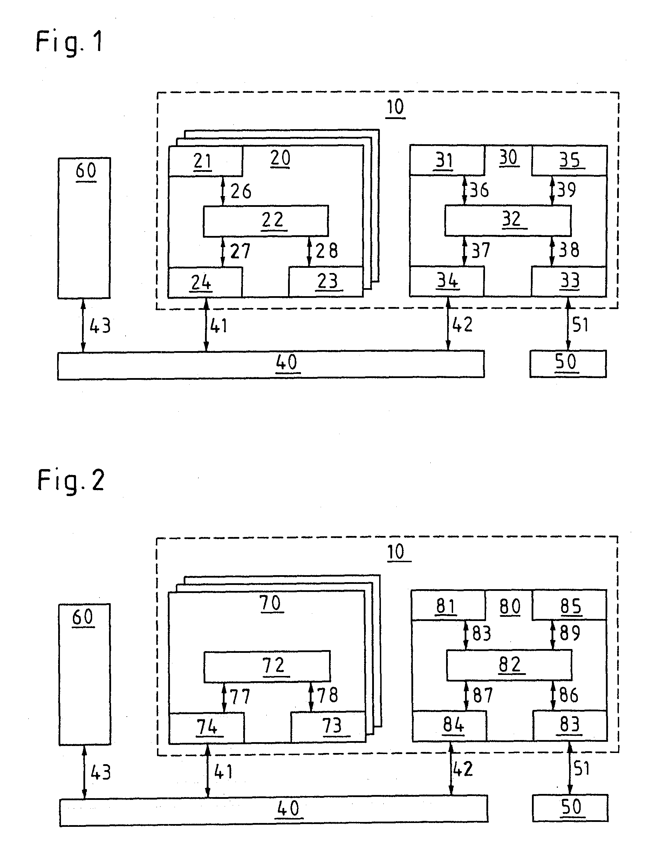

Für den ersten Fall ist der modulare Aufbau der wesentlichen Gateway-Funktionen in Fig. 1 schematisch dargestellt. Das Ansprechen einer Funktion im HAVi-Netz vom externen Netz aus bedingt die Repräsentation dieser Funktion im externen Netzwerk 50. Diese Aufgabe übernimmt das Mirror FCM 20. Gleichzeitig werden alle Geräte- oder Funktionsfamilien, für die eine Repräsentanz in Form eines entsprechenden Mirror FCM bereitsteht, vom Server FCM 30 im externen Netzwerk 50 bekannt gemacht. Diese Funktion wird maßgeblich von der Device Discovery Representation 31 gewährleistet. Dabei werden diejenigen Mechanismen und Verfahren verwendet, die im externen Netz zur Verfügung stehen. Dadurch ist eine volle Kompatibilität zu den verschiedenen externen Netzen gewährleistet. Die Anbindung des externen Netzes 50 geschieht über ein Schnittstellenmodul 33. Dieses ermöglicht das Senden und Empfangen von Informationen/Nachrichten über das externe Netz 50. Außerdem erlaubt dieses Modul die Anpassung an spezifische Adressierungsverfahren des externen Netzes 50. Die Umsetzung der spezifischen Adressierung des externen Netzwerks 50 auf die Adressierung des HAVi-Netzes geschieht im Adressumsetzungsmodul 35. Hier wird eine Liste gespeichert, aus der die SEID (Software Element Identification) des für eine Funktion zuständigen Mirror-FCMs 20 und die Adresse, unter der diese Funktion im externen Netz 50 ausgeführt werden kann, hervorgeht.

Analog dazu stellt das Mirror-FCM 20 mit dem Funktionsrepräsentanzmodul 21 den aktuellen Zustand und die aktuell verfügbaren Funktionen des Gerätes oder der Funktionsfamilie dar, die durch das Mirror-FCM 20 repräsentiert werden.

Eine Nachricht, welche über das externe Netz 50 mit dem Ziel einer Funktion innerhalb des HAVi-Netzes in das Server FCM 30 kommt, wird vom Schnittstellen Modul 33 für das externe Netzwerk entgegengenommen und dem Management Modul 32 zugeführt. Dabei ist es wichtig, die Ziel- und vorteilhaft auch die Quelladresse mit zu übermitteln. Anhand der Zieladresse ermittelt das Management Modul 32 die SEID des zugeordneten Mirror FCMs 20 im Adressumsetzungsmodul 35 und leitet den Befehl, eingepackt in eine HAVi-Nachricht, über die HAVi-Schnittstelle 34 und das HAVi-Messaging System 40 an das entsprechende Mirror FCM 20 weiter.

Im Mirror FCM 20 empfängt die HAVi-Schnittstelle 24 die Nachricht und leitet diese an das Management Modul 22 des Mirror FCMs 20 weiter. Dieses reicht den Inhalt der Nachricht an das Befehlskonvertierungsmodul 23 weiter. Dort wird eine Umsetzung der spezifischen Nachricht in Syntax und Semantik des externen Netzes 50 in die Syntax und Semantik des HAVi-Netzes durchgeführt. Anschließend sorgt das Management Modul 22 mit Hilfe der HAVi-Schnittstelle 24 und dem HAVi-Messaging System 40, dass die HAVi Nachricht das Ziel innerhalb des HAVi-Netzwerkes erreicht.

Im zweiten Fall, bei dem eine im externen Netz 50 vorhandene Funktion vom HAVi-Netzwerk aus angesprochen wird, ist analog zu verfahren. Der modulare Aufbau der wesentlichen Gateway-Funktionen in Fig. 2 schematisch dargestellt. Der Unterschied besteht im Wesentlichen darin, dass keine zusätzliche Darstellung der im HAVi-Netzwerk angebotenen Funktionen des externen Netzes mehr stattfindet, da der HAVi-Standard über die Funktion der Registry diesen Dienst bereits anbietet und hier genutzt wird. Das Grundprinzip verhält sich analog, das heißt, eine Anwendung im externen Netzwerk 50 wird durch die externen-Geräte FCMs 70 (analog zu Mirror FCMs 20) als originäre HAVi-Funktion präsentiert und ist als solche nicht zu unterscheiden.

Eine Kombination der beiden Fälle 1 und 2 ist immer dann sinnvoll, wenn der Informationsaustausch entweder gleichberechtigt in beide Netze läuft, oder von beiden Netzen aus Funktionen des jeweils anderen Netzes ausgeführt werden.

Zur Veranschaulichung soll die Erfindung anhand eines weiteren Ausführungsbeispiels näher erläutert werden:

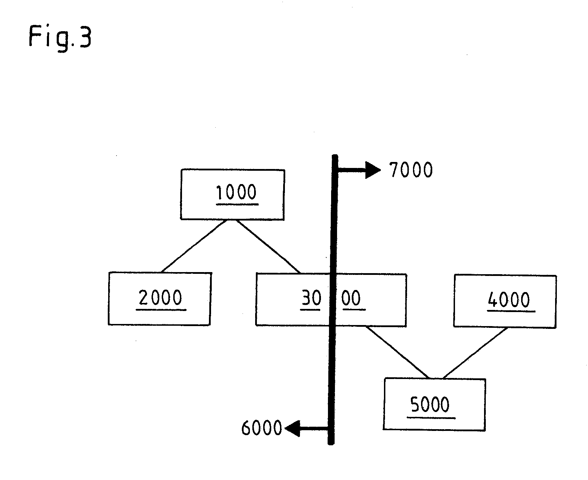

Zunächst wird von einem Netz entsprechend Fig. 3 ausgegangen. Dabei wird hier der Fall 1 beschrieben, das heißt, es wird der Zugriff vom externen Netz 7000 auf Komponenten des HAVi-Netzes 6000 ermöglicht. Die Gateway-Komponente 3000 enthält das in Fig. 1 beschriebene Gateway-DCM und die zusätzlich benötigten HAVi-Softwareelemente.

Im HAVi-Netzwerk 6000 befinden sich in diesem Beispiel ein CD-Player 1000 und ein digitaler Verstärker 2000. Zusätzlich existieren auf einem beliebigen Gerät des HAVi-Netzeswerkes 6000 Device Control Modules (DCM) für den CD-Player 1000 und den Verstärker 2000.

Im externen Netz 7000 befindet sich auf einem Gerät 4000 eine Applikation, welche die beiden Geräte 1000, 2000 des HAVi-Netzes 6000 steuern soll. Das externe Netz 7000 basiert dabei auf dem http-Standard. Die Applikation im externen Netz 7000 ist ein handelsüblicher http-Browser.

Bei der Initialisierung des HAVi Netzes 6000 werden die beiden DCMs für die Geräte 1000, 2000 und das Gateway DCM gestartet. Mit dem Gateway DCM werden auch das Server FCM und zumindest zwei Mirror FCMs (je eines für einen CD-Player 1000 und einen digitalen Verstärker 2000) gestartet.

Die beiden Mirror FCMs ermitteln daraufhin mit Hilfe der HAVi-Registry, die Adresse (SEID) und unter Umständen auch den Status der ihnen entsprechenden DCMs oder FCMs (das CD-Player-Mirror-FCM findet das CD-Player-DCM/FCM usw.) und speichert diese Zieladresse intern im Management Modul ab. Außerdem kann hier aufgrund verschiedener ermittelter Eigenschaften des Geräte-DCMs oder des entsprechenden FCMs (zum Beispiel Version, Hersteller, Status, Zugriffsberechtigung, Funktionsumfang, OEM-Konfiguration) bereits eine Profilierung der angebotenen Funktionen durchgeführt werden.

Das Server FCM ermittelt - ebenfalls mit Hilfe der Registry - welche Mirror FCMs für das spezifische externe Netz 7000 im HAVi-Netz 6000 zur Verfügung stehen und speichert ebenfalls die Adresse (SEID) und gegebenenfalls zusätzliche Informationen über die Mirror FCMs. Basierend auf die Adressliste und den spezifischen Eigenschaften des externen Netzes 7000 wird die Adressumsetzungstabelle des Adressumsetzungsmoduls aufgebaut und die dort eingetragenen virtuellen Funktionen oder Geräte des HAVi-Netzes 6000 im externen Netz 7000 bekannt gemacht. Diese Funktion übernimmt die Device Discovery Representation, welche die im externen Netz angebotenen HAVi-Geräte (CD-Player 1000 und Verstärker 2000) in Form einer HTML-Seite dem Schnittstellenmodul des externen Netzes 7000 anbietet (in diesem Fall ein http-Server).

Der Browser im Gerät 4000 lädt diese HTML-Seite und zeigt damit dem Anwender die zwei verfügbaren Geräte 1000, 2000 an. Der Anwender wählt jetzt den CD-Player 1000 mit Hilfe einer URL oder einem Link aus. Dieser http-request wird vom http-Server im Server FCM an das Management Modul weitergegeben. Aufgrund der darin enthaltenen Ziel-Adresse in Form einer URL ermittelt das Adressumsetzungsmodul die SEID des CD-Player-Mirror-FCMs. Der http-request wird in eine HAVi-Message eingepackt und an das CD-Player-Mirror-FCM weitergeschickt. Dort wird diese Nachricht im Management Modul und im Befehlsumsetzungsmodul ausgewertet und als Belegung des Gerätes 1000 ,CD-Player' interpretiert. Daraufhin führt das Mirror-FCM alle Funktionen aus, die im HAVi-Standard für die Belegung eines Geräte-DCMs/FCMs vorgesehen sind. Das ist insbesondere die Reservierung des DCMs/FCMs unter Zuhilfenahme des Resource Managers. Nach der Belegung des Geräte-DCMs/FCMs und damit auch des Gerätes 1000, generiert das Funktionsrepräsentanzmodul eine HTML-Seite mit dem aktuellen Status des CD-Players 1000 und den verfügbaren Funktionen (zum Beispiel Play, Track_Up, Track_Down, Shuffle_Play). Jeder dieser Funktionen ist eine URL hinterlegt (zum Beispiel in der Form http://car/cd player/play). Diese HTML-Seite wird nun an das Server-FCM und dem darin enthaltenen http-Server zurückgesendet und von diesem dargestellt. Das heißt, der Anwender erhält jetzt eine neue Seite, welche die Funktionen und Eigenschaften des gewählten Gerätes 1000, 2000 darstellt. Wählt jetzt der Anwender eine der angebotenen Funktionen aus, wird dadurch erneut ein http-request ausgelöst. Dieser beinhaltet jetzt die URL oder den Link der gewählten Funktion (zum Beispiel Play). Dieser Aufruf wird auf dem beschriebenen Weg an das Befehlsumsetzungsmodul des Mirror-FCMs weitergegeben, dort interpretiert und in die entsprechende HAVi-Nachricht umgesetzt. Diese HAVi-Nachricht wird an das Geräte-DCM/FCM weitergeleitet und dort ausgeführt. Eine etwaige Rückmeldung erreicht auf dem üblichen HAVi-Weg über das Messaging System das Befehlsumsetzungsmodul und wird in eine entsprechende Rückmeldung des externen Netzes 7000 umgesetzt. Die benötigte Belegung des digitalen Verstärkers 2000, um das Play-Kommando sinnvoll auszuführen, muss jetzt weder von der Anwendung im externen Gerät, noch vom Mirror FCM durchgeführt werden, da das Geräte-DCM/FCM des CD-Players 1000 für diese Belegung sorgen kann. Es ist aber genauso möglich, diese Belegung vom Mirror FCM oder der externen Anwendung durchzuführen.

Die Belegung des Geräte-DCMs beziehungsweise des zugehörigen FCMs kann vorteilhaft auch erst bei Ausführen einer funktionalen Anfrage (zum Beispiel ,Play') durchgeführt werden. Dadurch bleibt ein Gerät 1000, 2000 für andere Applikationen nutzbar, auch wenn über das externe Netz 7000 die oberste Bedienebene und/oder Statusebene eines Gerätes aufgerufen wurde. Besonders vorteilhaft wird jedoch in diesem Fall der Status des Gerätes mit angezeigt, um den Anwender auf eine eventuell bereits erfolgte Belegung des ausgewählten Gerätes hinzuweisen.

Basierend auf dem in Fig. 3 dargestellten Netzwerk soll der Informationstransport aus dem HAVi-Netz 6000 in das externe Netz 7000 nachfolgend erläutert werden.

Das externe Netz 7000 ist beispielsweise ein Netzwerk basierend auf dem CAN Standard. An dieses Netzwerk 7000 sind verschiedene Geräte angeschlossen, die beispielsweise Informationen über den Zustand eines Kraftfahrzeuges (Geschwindigkeit, Position, Außentemperatur, Motordrehzahl) generieren und übertragen soll.

Diese Informationen werden periodisch auf den CAN-Bus gesendet und können von jedem Teilnehmen am CAN-Bus bei Bedarf ausgelesen werden. Das Management Modul des Client FCM übermittelt jede dieser empfangenen CAN-Nachrichten an die entsprechenden FCMs des externen Gerätes. Im beschriebenen Fall ist es sinnvoll nur ein externes-Geräte-FCM zu verwenden, dass alle interessierenden Informationen den HAVi-Softwareelementen zur Verfügung stellt. Das heißt, im Adressumsetzungsmodul ist in diesem Fall nur eine Zieladresse dieses einen FCMs eingetragen, an die alle eingehenden CAN-Nachrichten weitergeleitet werden.

Das externe-Geräte-FCM kann jetzt mit Hilfe der weitreichenden HAVi-Methoden die Informationen der CAN-Geräte entweder kontinuierlich aussenden, bei Änderung des Wertes eine Aktualisierung senden oder auch nur auf Anfrage den letzten oder eine ausgewählte Historie von Werten übertragen. Dabei meldet sich ein interessiertes Softwareleement bei diesem FCM für eine bestimmte Information (oder eine Sammlung von Informationen) und einen bestimmten Liefermechanismus an.

Nachstehend soll der beidseitige Informationsaustausch erläutert werden. Dabei ist das externe Netz ein IP-basiertes Netzwerk. Ziel ist die transparente Übertragung von IP-Datenpaketen zwischen Softwareelementen im HAVi-Netz oder Applikationen im HAVi-Netz und Anwendungen im IP-basierten Netz. Dazu stellt ein beliebiges Gerät im HAVi-Netz eine, für das jeweilige Betriebssystem zur Nutzung IP-basierter Anwendungen übliche Schnittstelle (zum Beispiel WinSOCK) zur Verfügung. Diese wird von den Anwendungen in der herkömmlichen Art und Weise genutzt. Als Transport-Protokoll wird jetzt jedoch nicht IP verwendet, sondern HAVi, das heißt, die von der genutzten Schnittstelle generierten Datagramme werden von einem entsprechenden Softwarelement in HAVi-Nachrichten eingepackt und an das IP-Gateway-DCM gesendet. Die Funktion des Mirror-FCM oder auch des externen-Geräte-FCMs bleibt dabei ungenutzt. Das Server/Client-FCM im Gateway DCM sorgt für das Auspacken der Datagramme aus den HAVi-Nachrichten und das Übermitteln dieser Datagramme über das Schnittstellenmodul des externen (IP-)Netzes. Der wesentliche Aspekt der Umsetzung der IP-Adresse in eine HAVi-Adresse (hier die des einpackenden Softwareelementes) geschieht wiederum durch das Adressumsetzungsmodul. Zusätzlich wird unter Umständen eine Transaktionsverfolgung in diesem Modul benötigt, welche die Zustellung von Antworten auf ausgesendete IP-Pakete erlaubt.

Besonders vorteilhaft ist es, wenn bei IP-basierten Netzen das bekannte IP-Masquerading (auch: Port Address Translation) verwendet wird. Dadurch ist nur eine IP-Adresse im Fahrzeug notwendig, die verschiedenen IP-Verbindungen aus dem Fahrzeug werden dabei auf unterschiedliche Ports der externen IP-Verbindung abgebildet.

Weiterhin ist es vorteilhaft, die Funktionalität des Mirror-FCMs in die normalen Geräte-FCMs zu integrieren. Das Server FCM durchsucht dabei, wie beschrieben, die Registry nach bestimmten Eigenschaften der FCMs und DCMs und ermittelt daraus die im externen Netz verfügbaren Funktionen.

Die Mirror FCM und die externe-Geräte-FCM erweitern ihren Eintrag in der Registry in einer bevorzugten Ausführungsvariante um ein zusätzliches Attribut, anhand dessen die unterstützen Typen von externen Netzen identifiziert werden können.

Besonders vorteilhaft ist es, wenn ein Mirror FCM die Funktionen von mehreren Geräte-DCMs/FCMs ansprechen kann. Dazu ist eine Speicherung der entsprechenden Geräte-DCM/FCM-SEID mit der zugehörigen Funktion notwendig.

## Patentansprüche

1. Verfahren zur funktionalen Verbindung von mindestens zwei Netzwerken, wobei mindestens ein Netzwerk ein auf dem HAVi-Standard basierendes Netzwerk (HAVi-Netzwerk) und mindestens ein Netzwerk ein nicht auf dem HAVi-Standard basierendes Netzwerk (externes Netzwerk) ist,
**gekennzeichnet durch** folgende Verfahrensschritte:
- Repräsentation der Geräte/Funktionen des mindestens einen HAVi-Netzwerkes in mindestens einem externen Netzwerk (50) **durch** Abbildung der Geräte/Funktionen des mindestens einen HAVi-Netzwerkes in dafür vorgesehenen Modulen innerhalb des mindestens einen HAVi-Netzwerkes und Bekanntmachen der in den Modulen abgebildeten Geräte/Funktionen in mindestens einem externen Netzwerk (50)
und/oder
- Repräsentation der Geräte/Funktionen des mindestens einen externen Netzwerkes (50) in mindestens einem HAVi-Netzwerk **durch** Bekanntmachen der Geräte/Funktionen des mindestens einen externen Netzwerks (50) in mindestens einem HAVi-Netzwerk und Abbildung der Geräte/Funktionen des externen Netzwerkes in dafür vorgesehene Module innerhalb des mindestens einen HAVi-Netzwerkes (50).

2. Verfahren nach Anspruch 1,
**dadurch gekennzeichnet, dass**
die Repräsentation der Geräte/Funktionen des mindestens HAVi-Netzwerkes in mindestens einem externen Netzwerk (50) durch Abbildung der Geräte/Funktionen des mindestens einen HAVi-Netzwerkes in dafür vorgesehene Functional Control Module (Mirror FCM) (20) in mindestens einem HAVi-Netzwerk und Bekanntmachen der in den Mirror FCM (20) abgebildeten Geräte/Funktionen in mindestens einem externen Netzwerk (50) durch ein dafür vorgesehenes Functional Control Module (Server FCM) (30) erfolgt.

3. Verfahren nach Anspruch 1 oder 2,
**dadurch gekennzeichnet, dass**
die Repräsentation der Geräte/Funktionen des mindestens einen externen Netzwerkes (50) in mindestens einem HAVi-Netzwerk durch Bekanntmachen der Geräte/Funktionen des mindestens einen externen Netzwerkes (50) in mindestens einem HAVi-Netzwerk durch ein dafür vorgesehenes Functional Control Module (Client FCM) (80) und Abbildung der Geräte/Funktionen des mindestens einen externen Netzwerkes in dafür vorgesehene Functional Control Module (Externe Geräte/Funktionen FCM) (70) erfolgt.

4. Verfahren nach Anspruch 2 oder 3,
**dadurch gekennzeichnet, dass**
eine Information/Nachricht aus einem externen Netzwerk (50) mit dem Ziel eines Gerätes/Funktion innerhalb eines HAVi-Netzes vom externen Netzwerk (50) über den Server FCM (30) entgegengenommen, an das Mirror FCM (20) des korrespondierenden Gerätes/der korrespondierenden Funktion weitergeleitet, vom Mirror FCM (20) empfangen und dort von der Syntax und Semantik des externen Netzes in die Syntax und Semantik des HAVi-Netzes umgesetzt und dann an das Ziel innerhalb des HAVi-Netzes weitergeleitet wird.

5. Verfahren nach Anspruch 2 oder 3,
**dadurch gekennzeichnet, dass**
eine Nachricht aus einem HAVi-Netz mit dem Ziel eines Gerätes/einer Funktion innerhalb eines externen Netzwerkes (50) vom korrespondierenden Externe Geräte/Funktionen FCM (70) innerhalb des HAVi-Netzes entgegengenommen, dort von der Syntax und Semantik des HAVi-Netzwerkes in die Syntax und Semantik des externen Netzwerkes (50) umgesetzt, an das Client FCM (80) weitergeleitet, und von dort in das externe Netzwerk (50) übertragen wird.

6. Kommunikations-Gateway zur funktionalen Verbindung von mindestens zwei Netzwerken, wobei mindestens ein Netzwerk ein auf dem HAVi-Standard basierendes Netzwerk (HAVi-Netzwerk) und mindestens ein Netzwerk ein nicht auf dem HAVi-Standard basierendes Netzwerk (externes Netzwerk) ist,
**gekennzeichnet durch**
- mindestens eine Einheit zum Umwandeln von Informationen/Nachrichten von der Syntax und Semantik des HAVi-Netzwerkes in die Syntax und Semantik des externen Netzwerkes (50) und mindestens eine Einheit zum Übertragen dieser Informationen/Nachrichten vom HAVi-Netzwerk in mindestens ein externes Netzwerk (50)
und/oder
- mindestens eine Einheit zum Übertragen von Informationen/Nachrichten aus mindestens einem externen Netzwerk (50) in das HAVi-Netzwerk und mindestens eine Einheit zum Umwandeln von Informationen/Nachrichten von der Syntax und Semantik des externen Netzwerkes (50) in die Syntax und Semantik des HAVi-Netzwerkes.

7. Kommunikations-Gateway nach Anspruch 6,
**dadurch gekennzeichnet, dass**
die Einheit zum Umwandeln von Informationen/Nachrichten von der Syntax und Semantik des externen Netzwerkes (50) in die Syntax und Semantik des HAVi-Netzwerkes (Mirror FCM) (20) ein Management Modul (22), ein Funktionen/Geräte-Repräsentanzmodul (21), ein Befehlskonvertierungsmodul (23) und eine HAVi-Schnittstelle (24) aufweist, wobei das Mirror FCM (20) über die HAVi-Schnittstelle (24) mit dem HAVi-Messaging System (40) verbunden ist, und das Funktionen/Geräte-Repräsentanzmodul (21) den aktuellen Zustand der Geräte beziehungsweise die aktuell verfügbaren Funktionen innerhalb des HAVi-Netzwerkes darstellt, das Befehlskonvertierungsmodul (23) Informationen/Nachrichten von der Syntax und Semantik des externen Netzwerkes in die Syntax und Semantik des HAVi-Netzwerkes umwandelt und das Management Modul (22) die HAVi-Schnittstelle (24), das Funktionen/Geräte-Repräsentanzmodul (21) und das Befehlskonvertierungsmodul (23) steuert.

8. Kommunikations-Gateway nach Anspruch 6,
**dadurch gekennzeichnet, dass**
die Einheit zum Umwandeln von Informationen/Nachrichten von der Syntax und Semantik des HAVi-Netzwerkes in die Syntax und Semantik des externen Netzwerkes (Externe Geräte/Funktionen FCM) (70) ein Management Modul (72), ein Befehlskonvertierungsmodul (73) und eine HAVi-Schnittstelle (74) aufweist, wobei das Externe Geräte/Funktionen FCM (70) über die HAVi-Schnittstelle (74) mit dem HAVi-Messaging System (40) verbunden ist, und das Befehlskonvertierungsmodul (73) Informationen/Nachrichten von der Syntax und Semantik des HAVi-Netzwerkes in die Syntax und Semantik des externen Netzwerkes (50) umwandelt und das Management Modul (72) die HAVi-Schnittstelle (74) und das Befehlskonvertierungsmodul (73) steuert.

9. Kommunikations-Gateway nach Anspruch 6,
**dadurch gekennzeichnet, dass**
die Einheit zum Übertragen von Informationen/Nachrichten vom HAVi-Netzwerk in ein externes Netzwerk (Client FCM) (80) ein Management Modul (82), ein Device Discovery Representation-Modul (81), ein Adressumsetzungsmodul (85), eine HAVi-Schnittstelle (84) und eine Schnittstelle (83) zu einem externen Netzwerk (50) aufweist, wobei das Client FCM (80) über die HAVi-Schnittstelle (84) mit dem HAVi-Messaging System (40) verbunden ist, und das Adressumsetzungsmodul (85) die Adresse eines externen Gerätes oder einer externen Funktion ermittelt, das Device Discovery Representation-Modul (81) den Zustand beziehungsweise die Verfügbarkeit der Geräte/Funktionen des externen Netzwerkes (50) darstellt und das Management Modul (82) die HAVi-Schnittstelle (84), die Schnittstelle zum externen Netzwerk (83), Device Discovery Representation-Modul (81) und das Adressumsetzungsmodul (85) steuert.

10. Kommunikations-Gateway nach Anspruch 6,
**dadurch gekennzeichnet, dass**
die Einheit zum Übertragen von Informationen/Nachrichten vom externen Netzwerk (50) in ein HAVi-Netzwerk (Server FCM) (30) ein Management Modul (32), ein Device Discovery Representation-Modul (31), ein Adressumsetzungsmodul (35), eine HAVi-Schnittstelle (34) und eine Schnittstelle (33) zu einem externen Netzwerk aufweist, wobei das Client FCM (30) über die HAVi-Schnittstelle (34) mit dem HAVi-Messaging System (40) verbunden ist, und das Adressumsetzungsmodul die Adresse eines korrespondieren Mirror FCM eines Gerätes oder einer Funktion des HAVi-Netzwerkes ermittelt, das Device Discovery Representation-Modul (31) den Zustand beziehungsweise die Verfügbarkeit der Geräte/Funktionen des externen Netzwerkes (50) darstellt und das Management Modul (32) die HAVi-Schnittstelle (34), die Schnittstelle zum externen Netzwerk, das Device Discovery Representation-Modul (31) und das Adressumsetzungsmodul (35) steuert.

11. Kommunikations-Gateway nach Anspruch 7 bis 10,
**dadurch gekennzeichnet, dass**
mindestens ein Mirror FCM (20) in ein Functional Control Module (FCM) eines korrespondierenden Gerätes integriert ist.
